# EUROPEAN PATENT SPECIFICATION

(11) **EP 4 425 291 B1**
(45) Date of publication and mention of the grant of the patent: **26.11.2025**
(21) Application number: 23189122.7
(22) Date of filing: 02.08.2023
(51) Int. Cl.: G05D 1/00

(54) **METHOD FOR CONSTRUCTING VIRTUAL BOUNDARY, AUTONOMOUS MOBILE MOWING APPARATUS, AND USER TERMINAL**
VERFAHREN ZUR KONSTRUKTION EINER VIRTUELLEN GRENZE, AUTONOME MOBILE MÄHVORRICHTUNG UND BENUTZERENDGERÄT
PROCÉDÉ DE CONSTRUCTION D'UNE LIMITE VIRTUELLE, TONDEUSE AUTONOME ET TERMINAL UTILISATEUR

(30) Priority: 28.02.2023 CN 202310214083
(43) Date of publication of application: 04.09.2024
(60) Divisional application: 25199886.0
(73) Proprietor: Willand (Beijing) Technology Co., Ltd., Beijing 100192 (CN)
(72) Inventor: CHEN, Zichong, Haidian District, Beijing 100192 (CN); LV, Zhuo, Haidian District, Beijing 100192 (CN); LI, Chunhong, Haidian District, Beijing 100192 (CN); YU, Tianning, Haidian District, Beijing 100192 (CN)
(74) Representative: Kraus & Lederer PartGmbB

(56) References cited:
- WO-A2-03/039314
- US-A1- 2020 154 632
- ROTTMANN NILS ET AL: "Loop Closure Detection in Closed Environments", 2019 EUROPEAN CONFERENCE ON MOBILE ROBOTS (ECMR), IEEE, 4 September 2019 (2019-09-04), pages 1 - 8, XP033635189, DOI: 10.1109/ECMR.2019.8870938

## Description

### TECHNICAL FIELD

Embodiments of the present disclosure relate to the technical field of artificial intelligence, and in particular to, a method for constructing a virtual boundary, an autonomous mobile mowing apparatus, and a user terminal.

### BACKGROUND

As a fully automatic mechanic tool for trimming grass and vegetation, an autonomous mobile mowing apparatus is widely used in occasions, such as landscaping, trimming, household, and public lawn trimming. Such a traditional autonomous mobile mowing robot is controlled to establish a virtual boundary mostly relying on remote control. Although a user no longer needs to actually operate the autonomous mobile mowing apparatus, operation requirements of the user are increased. Therefore, it is necessary to smartly establish a traveling boundary of the autonomous mobile mowing apparatus.

At present, a smart autonomous mobile mowing apparatus based on a satellite navigation technology only needs to guide the autonomous mobile mowing apparatus to travel around a lawn boundary, and positioning coordinate data of the boundary can be recorded. Similarly, data may be collected and annotated in this way to record an obstacle or a channel, thereby reducing operation requirements for the user.

However, since the autonomous mobile mowing apparatus is manually guided to travel around the lawn boundary, when the virtual boundary is closed, the autonomous mobile mowing apparatus may need to perform position adjustment many times before the boundary can be closed when different users have different operation skills and different proficiency degrees, thereby resulting in a low efficiency of boundary closure. Moreover, in a process of adjusting the autonomous mobile mowing apparatus, the autonomous mobile mowing apparatus will repeatedly roll a lawn near the autonomous mobile mowing apparatus, thus damaging the lawn to a certain extent.

US2020154632 is directed an automatic boundary closing method for an intelligent lawn mower. The method includes the following steps: starting a boundary teaching mode of the intelligent lawn mower; acquiring and storing starting point position information of the intelligent lawn mower; recording position information of the intelligent lawn mower in real time and determining whether the distance between the current position of the intelligent lawn mower and the starting point is less than or equal to a distance threshold; if the distance is less than or equal to the distance threshold, further determining whether an automatic boundary closing instruction input by a user is received; executing the automatic boundary closing instruction of the user, and generating boundary closing data by using an interpolation algorithm and storing the data; and ending the boundary teaching mode.

WO03039314A2 is directed to an autonomous machine comprises driving means for moving the machine along a surface of an area, and a navigation system. The navigation system causes the machine to follow a boundary of the area, storing path information on the path travelled by the machine as the machine follows the boundary and compares when the machine has returned to a previously visited position in the area. The navigation system compares the latest section of the path travelled by the machine with information representing a section of the path previously stored in the memory and decides when the new path information and previously stored path information are substantially the same.

"Loop Closure Detection in Closed Environments", by ROTTMANN NILS AL, propose a loop closure detection method based only on odometry data which can be generated using low-range or binary signal sensors together with simple wall following techniques. This documents shows how to include the detected loop closing constraints into a pose graph formulation.

### SUMMARY

In view of the above problems, embodiments of the present disclosure are presented to provide a method for constructing a virtual boundary, an autonomous mobile mowing apparatus, and a user terminal, to at least solve a problem that existing boundary closure is less accurate.

One or more embodiments of the present disclosure provide a method for constructing a virtual boundary, including: controlling an autonomous mobile mowing apparatus to travel within a to-be-processed region from a starting point for map construction, and recording a position of the autonomous mobile mowing apparatus; and outputting a virtual boundary map when a boundary closing condition is satisfied, where the boundary closing condition includes a distance between a current position of the autonomous mobile mowing apparatus and a position of the starting point for map construction being less than or equal to a first threshold, a length of a minimal bounding rectangle of a closed region being greater than or equal to a second threshold, and a width of the minimal bounding rectangle being greater than or equal to a third threshold, where the closed region is a region surrounded by a connecting line between the current position and the starting point for map construction and a historical traveling path, and the first threshold is greater than a positioning accuracy of a sensor in the autonomous mobile mowing apparatus.

According to another aspect of the present disclosure, an autonomous mobile mowing apparatus is provided, including: a controller configured to: collect boundary point information in a traveling process of constructing a virtual boundary; send the boundary point information to a user terminal; receive a virtual boundary map from the user terminal, where the virtual boundary map is determined by the user terminal based on the boundary point information after receiving a boundary closure confirmation message inputted for a boundary closure prompt message, the boundary closure prompt message is outputted from the user terminal after the autonomous mobile mowing apparatus satisfies a boundary closing condition, the boundary closing condition includes a distance between a current position of the autonomous mobile mowing apparatus and a starting point for map construction being less than or equal to a first threshold, a length of a minimal bounding rectangle of a closed region being greater than or equal to a second threshold, and a width of the minimal bounding rectangle being greater than or equal to a third threshold, where the closed region is a region surrounded by a connecting line between the current position and the starting point for map construction and a historical traveling path, and the first threshold is greater than a positioning accuracy of a sensor in the autonomous mobile mowing apparatus; and store the virtual boundary map.

According to another aspect of the present disclosure, a user terminal is provided, including: a processing unit and a display interface; where the processing unit is configured to display a boundary closure prompt message through the display interface after an autonomous mobile mowing apparatus satisfies a boundary closing condition, and output a virtual boundary map after receiving a boundary closure confirmation message inputted for the boundary closure prompt message, where the boundary closing condition includes a distance between a current position of the autonomous mobile mowing apparatus and a starting point for map construction of the autonomous mobile mowing apparatus being less than or equal to a first threshold, a length of a minimal bounding rectangle of a closed region being greater than or equal to a second threshold, and a width of the minimal bounding rectangle being greater than or equal to a third threshold, where the closed region is a region surrounded by a connecting line between the current position and the starting point for map construction and a historical traveling path, and the first threshold is greater than a positioning accuracy of a sensor in the autonomous mobile mowing apparatus.

According to another aspect of the present disclosure, an electronic device is provided, including: a processor, a memory, a communication interface, and a communication bus, where the processor, the memory, and the communication interface complete communication with each other through the communication bus; and the memory is configured to store at least one executable instruction, where the executable instruction, when executed by the processor, causes the processor to perform the method for constructing a virtual boundary according to the first aspect of the present disclosure.

According to another aspect of the present disclosure, a non-transitory computer-readable storage medium storing computer instructions is provided, where the computer instructions are used for causing a computer to perform the method for constructing a virtual boundary according to the first aspect of the present disclosure.

With the above technical schemes, a boundary closing condition is set to replace manual guidance of the autonomous mobile mowing apparatus to perform boundary closure, and a virtual boundary map is output when the boundary closing condition is satisfied, thereby preventing the autonomous mobile mowing apparatus from repeated position adjustment and repeated crushing of a nearby lawn for boundary closure, reducing the damage of the autonomous mobile mowing apparatus to the lawn, and improving the efficiency of virtual boundary closure. A first threshold is set to be greater than a positioning accuracy of a sensor in the autonomous mobile mowing apparatus, thereby avoiding a problem of a low boundary closure efficiency caused by insufficient positioning accuracy in the boundary closure of the autonomous mobile mowing apparatus, and further improving the efficiency of virtual boundary closure.

### BRIEF DESCRIPTION OF THE DRAWINGS

To more clearly describe technical schemes of embodiments of the present disclosure or existing technologies, drawings to be used in the description of the embodiments or the existing technologies will be briefly introduced below. Apparently, the drawings described below are some embodiments of the present disclosure. For those of ordinary skills in the art, other drawings may also be obtained based on these drawings without making creative work.
FIG. 1 is a schematic flowchart of steps of a method for constructing a virtual boundary provided in Embodiment I of the present disclosure;
FIG. 2 is a schematic diagram of an example system adapted for the method for constructing a virtual boundary in an embodiment of the present disclosure;
FIG. 3 is a schematic flowchart of steps of another method for constructing a virtual boundary provided in Embodiment II of the present disclosure;
FIG. 4 is a structural block diagram of an apparatus for constructing a virtual boundary provided in Embodiment III of the present disclosure;
FIG. 5 is a structural block diagram of an autonomous mobile mowing apparatus provided in Embodiment IV of the present application;
FIG. 6 is a structural block diagram of a user terminal provided in Embodiment V of the present disclosure; and
FIG. 7 is a structural block diagram of an electronic device provided in Embodiment VI of the present disclosure.

### DETAILED DESCRIPTION OF EMBODIMENTS

To enable those in the present technical field to better understand schemes of the present disclosure, technical schemes of embodiments of the present disclosure will be clearly and completely described below with reference to the drawings in the embodiments of the present disclosure. Apparently, the described embodiments are some embodiments, instead of all embodiments, of the present disclosure. All other embodiments obtained by those of ordinary skills in the art based on the embodiments of the present disclosure without making creative work are encompassed within the scope of protection of the present disclosure.

For convenience of description and understanding, before the description of the method, a structure and a working scenario of the autonomous mobile mowing apparatus are briefly described as follows.

In the present embodiment, the autonomous mobile mowing apparatus may be an automatic mower. The automatic mower may be configured to trim a lawn to guarantee that grass height in the lawn satisfies requirements. In order to realize automatic grass cutting, the automatic mower mainly includes a housing; and a driving wheel assembly, a mowing knife assembly, a controller, a communication module, a sensor, and the like provided on the housing.

The driving wheel assembly can drive the housing and components thereon to move. The mowing knife assembly is used for cutting grass. The controller is connected with electric signals of, e.g., the driving wheel assembly, the mowing knife assembly, the communication module, and the sensor, respectively, to control and position the automatic mower.

The communication module may be a module capable of implementing wireless communication, such as WIFI, Bluetooth, or cellular data network, and may be used to perform data communication between the automatic mower and an external device.

The sensor can detect data of the automatic mower, thereby positioning the automatic mower. For example, the sensor on the automatic mower may include, but is not limited to, a built-in IMU (inertial navigation unit), a GPS (global positioning system), a magnetometer, a barometer, etc.

Specific implementations of the embodiments of the present disclosure will be further described below with reference to the drawings in the embodiments of the present disclosure.

### Embodiment I

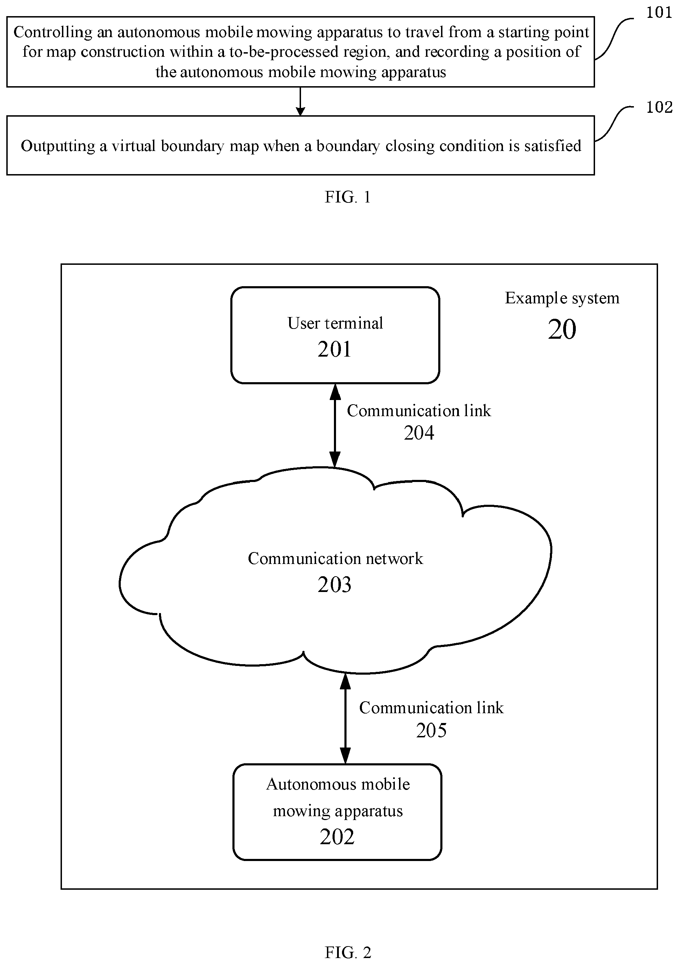

FIG. 1 is a schematic flowchart of steps of a method for constructing a virtual boundary provided in Embodiment I of the present disclosure. As shown in FIG. 1, a schematic flowchart of steps of a method for constructing a virtual boundary is shown. In the present embodiment, the method includes steps of:
Step 101: controlling an autonomous mobile mowing apparatus to travel from a starting point for map construction within a to-be-processed region, and recording a position of the autonomous mobile mowing apparatus.

In a process of constructing the virtual boundary of the autonomous mobile mowing apparatus, the autonomous mobile mowing apparatus is first controlled to travel from the starting point for map construction within the to-be-processed region, and record the position of the autonomous mobile mowing apparatus during the travelling.

The position of the autonomous mobile mowing apparatus may be recorded by sending position information through a sensor of the autonomous mobile mowing apparatus and recording the position information, or may be recorded by satellite positioning, which is not limited here.

Step 102: outputting a virtual boundary map when a boundary closing condition is satisfied.

The boundary closing condition includes a distance between a current position of the autonomous mobile mowing apparatus and a position of the starting point for map construction being less than or equal to a first threshold, where the first threshold is greater than a positioning accuracy of the sensor in the autonomous mobile mowing apparatus.

The boundary closing condition includes the distance between the current position of the autonomous mobile mowing apparatus and the starting point for map construction of the autonomous mobile mowing apparatus being less than or equal to the first threshold, where the first threshold is greater than the positioning accuracy of the sensor in the autonomous mobile mowing apparatus. The first threshold may be a numerical value, for example, 0.5 m. When the distance between the current position of the autonomous mobile mowing apparatus and the starting point for map construction of the autonomous mobile mowing apparatus is less than or equal to 0.5 m, for example, 0.2 m, a boundary closure prompt message is outputted. At the same time, the first threshold is required to be greater than the positioning accuracy of the sensor in the autonomous mobile mowing apparatus. The positioning accuracy of the sensor is associated with a type of the sensor itself, and the positioning accuracy of different sensors is different. An accuracy of positioning by RTK is generally between 0.02 m and 0.03 m. If the first threshold is set to be less than the positioning accuracy of the sensor, it will cause difficulties for the autonomous mobile mowing apparatus to ascertain whether to perform boundary closure, because the sensor fails to ascertain a distance less than its own accuracy, and then the autonomous mobile mowing apparatus fails to obtain a corresponding numerical value for ascertaining whether the boundary closing condition is satisfied. In this case, the autonomous mobile mowing apparatus may perform position adjustment many times in order to perform boundary closure, and repeatedly crush a lawn near the autonomous mobile mowing apparatus, thus damaging the lawn to a certain extent. Therefore, the first threshold is set to be greater than the positioning accuracy of the sensor in the autonomous mobile mowing apparatus, thereby avoiding occurrence of the above phenomenon.

The virtual boundary map indicates a moving boundary of the autonomous mobile mowing apparatus when mowing grass, where the moving boundary corresponds to the virtual boundary.

In an embodiment of the present disclosure, a boundary closing condition is set to replace manually guiding the autonomous mobile mowing apparatus to perform boundary closure, and output the virtual boundary map when the boundary closing condition is satisfied, thereby preventing the autonomous mobile mowing apparatus from repeated position adjustment and repeated rolling of the nearby lawn for boundary closure, reducing the damage of the autonomous mobile mowing apparatus to the lawn, and improving the efficiency of virtual boundary closure. The first threshold is set to be greater than the positioning accuracy of the sensor in the autonomous mobile mowing apparatus, thereby avoiding a problem of a low boundary closure efficiency caused by insufficient positioning accuracy in the boundary closure of the autonomous mobile mowing apparatus, and further improving the efficiency of virtual boundary closure.

In a possible implementation, the boundary closing condition may further include: a length of a minimal bounding rectangle of a closed region being greater than or equal to a second threshold, and a width of the minimal bounding rectangle being greater than or equal to a third threshold, where the closed region is a region surrounded by a connecting line between the current position and the starting point for map construction and a historical traveling path.

One of the boundary closing conditions may be ascertaining a size of the region surrounded by the historical traveling path of the autonomous mobile mowing apparatus in the process of constructing the virtual boundary and the connecting line between the current position and the starting point for map construction by first determining the closed region surrounded by the connecting line between the current position and the starting point for map construction and the historical traveling path, and then obtaining the minimal bounding rectangle of the closed region. This condition is satisfied when the length of the minimal bounding rectangle is greater than or equal to the second threshold and the width of the minimal bounding rectangle is greater than or equal to the third threshold.

In an embodiment of the present disclosure, the minimal bounding rectangle is established for the closed region to facilitate computing the length and the width of the closed region. The distance between the current position and the starting point for map construction is ascertained to replace manual ascertainment, thereby improving the efficiency and accuracy of boundary closure.

The thresholds of the length and the width of the minimal bounding rectangle of the closed region are set to eliminate a phenomenon that the mower travels in a straight line without forming an effective mowing region.

The mower constructs the virtual boundary map according to the collected position. A region surrounded by the virtual boundary map is a target mowing region. In order to ensure that the mower travels safely when automatically mowing grass, the whole mower needs to travel within the virtual boundary map, so that the thresholds set for the length and the width of the minimal bounding rectangle are associated with the length and the width of the mower. If the phenomenon that the mower travels in a straight line without forming an effective mowing region is not eliminated at the map construction stage, it is impossible to ensure that the whole mower travels within the virtual boundary map, and it is impossible to ensure that the mower travels safely at work.

In a possible implementation, the boundary closing condition may further include: a leading edge of the autonomous mobile mowing apparatus facing the starting point for map construction.

One of the boundary closing conditions may be ascertaining a leading edge orientation of the autonomous mobile mowing apparatus at the current position, and this condition is satisfied when the leading edge of the autonomous mobile mowing apparatus faces the starting point for map construction in the process of constructing the virtual boundary.

In an embodiment of the present disclosure, the leading edge orientation of the autonomous mobile mowing apparatus at the current position is ascertained to determine a subsequent moving direction of the autonomous mobile mowing apparatus, and then determine that the autonomous mobile mowing apparatus is approaching the starting point for map construction, thereby preventing the autonomous mobile mowing apparatus from entering a boundary closure state when the moving direction is away from the starting point for map construction, and further improving the efficiency of boundary closure.

In a possible implementation, in the boundary closing condition, the leading edge of the autonomous mobile mowing apparatus facing the starting point for map construction includes: an angle between a moving direction of the autonomous mobile mowing apparatus at the current position and the connecting line between the current position and the starting point for map construction being less than a fourth threshold.

The ascertaining the leading edge orientation of the autonomous mobile mowing apparatus may be ascertaining the moving direction of the autonomous mobile mowing apparatus at the current position, and this condition is satisfied when the angle between the moving direction of the autonomous mobile mowing apparatus and the connecting line between the current position of the autonomous mobile mowing apparatus and the starting point for map construction in the process of constructing the virtual boundary is less than the fourth threshold.

It should be noted that the moving direction of the autonomous mobile mowing apparatus can be reported by the autonomous mobile mowing apparatus, and or may be determined by, e.g., satellite positioning, which is not limited here.

In an embodiment of the present disclosure, the angle between the moving direction of the autonomous mobile mowing apparatus and the connecting line between the current position of the autonomous mobile mowing apparatus and the starting point for map construction in the process of constructing the virtual boundary is computed to determine the moving direction of the autonomous mobile mowing apparatus, thereby preventing the autonomous mobile mowing apparatus from entering the boundary closure state when the moving direction is away from the starting point for map construction, and further improving the efficiency of boundary closure.

In a possible implementation, the boundary closing condition may further include: a distance between a farthest point in the historical traveling path of the autonomous mobile mowing apparatus and the starting point for map construction being greater than a fifth threshold.

The fifth threshold may be 1 m, and one of the boundary closing conditions may be the distance between the farthest point in the historical traveling path of the autonomous mobile mowing apparatus and the starting point for map construction being greater than 1 m. The historical traveling path is a traveling path of the autonomous mobile mowing apparatus when traveling from the starting point for map construction to the current position, and the historical traveling path may be a path in any form except for a straight line, such as a polyline path or a curve path. Because a plane where the autonomous mobile mowing apparatus travels is not necessarily a flat plane, the historical traveling path may be a three-dimensional path, and only a projection part of the three-dimensional path on a horizontal plane is computed when the condition is ascertained.

In an embodiment of the present disclosure, the distance between the farthest point in the historical traveling path of the autonomous mobile mowing apparatus and the starting point for map construction is set to be greater than the fifth threshold, thereby preventing the autonomous mobile mowing apparatus from incorrect boundary closure when travelling a short path, and improving the accuracy of boundary closure.

In a possible implementation, the first threshold is greater than or equal to a horizontal length between a center point of the autonomous mobile mowing apparatus and the leading edge of the autonomous mobile mowing apparatus.

For example, the horizontal length between the center point of the autonomous mobile mowing apparatus and the leading edge of the autonomous mobile mowing apparatus is 0.4 m, and the first threshold is set to be greater than or equal to 0.4 m, e.g., 0.5 m.

In an embodiment of the present disclosure, when too small first threshold is avoided, a space for direction adjustment of the autonomous mobile mowing apparatus becomes smaller, and in order to approach the starting point for map construction, the autonomous mobile mowing apparatus will repeatedly crush grass around the starting point for map construction in a small spatial range during the adjustment, thereby resulting in ruts, and improving the accuracy of boundary closure.

In a possible implementation, the first threshold is from 0.5 m to 1 m.

In an embodiment of the present disclosure, the first threshold is set to be between 0.5 m and 1 m, thereby ensuring that the autonomous mobile mowing apparatus neither will be inconvenient to adjust the direction due to too small distance during closure, nor will perform incorrect closure due to too large distance, thus improving the accuracy of boundary closure.

In a possible implementation, the second threshold is from 0.5 m to 1 m, and the third threshold is from 1 m to 1.5 m.

In an embodiment of the present disclosure, the second threshold is set to be from 0.5 m to 1 m, and the third threshold is set to be from 1 m to 1.5 m, thereby minimizing the size of the region surrounded by the historical traveling path of the autonomous mobile mowing apparatus in the process of constructing the virtual boundary, and improving the accuracy of boundary closure.

In a possible implementation, the fourth threshold is from 91° to 179°.

In an embodiment of the present disclosure, the fourth threshold is set to be from 91° to 179°, thereby ensuring that the moving direction of the autonomous mobile mowing apparatus after entering the boundary closure state is approaching the starting point for map construction in the process of constructing the virtual boundary.

In a possible implementation, the fifth threshold is from 0.5 m to 1 m.

In an embodiment of the present disclosure, the fifth threshold is to be from 0.5 to 1 m, thereby preventing the autonomous mobile mowing apparatus from incorrect boundary closure when travelling a short path, and preventing the autonomous mobile mowing apparatus from missing a best opportunity for boundary closure when travelling a too long path, thus improving the accuracy of boundary closure.

In a possible implementation, the method for constructing a virtual boundary may further include: receiving operating data from the autonomous mobile mowing apparatus, where the operating data includes the historical traveling path, the current position, the starting point for map construction, and the moving direction, and then ascertaining whether the autonomous mobile mowing apparatus satisfies the boundary closing condition according to the operating data.

The historical traveling path is a traveling path of the autonomous mobile mowing apparatus when traveling from the starting point for map construction to the current position, and the historical traveling path may be a path in any form except for a straight line, such as a polyline path or a curve path. Because a plane where the autonomous mobile mowing apparatus travels is not necessarily a flat plane, the historical traveling path may be a three-dimensional path, and only a projection part of the three-dimensional path on a horizontal plane is computed when the condition is ascertained. The starting point for map construction of the autonomous mobile mowing apparatus is a point from which the autonomous mobile mowing apparatus travels in the process of constructing the virtual boundary. A boundary line may be determined based on at least one image collected by the autonomous mobile mowing apparatus through a carried apparatus such as a camera, or may be determined by a user terminal according to at least one image sent from the autonomous mobile mowing apparatus. A movement speed of the autonomous mobile mowing apparatus in the process of constructing the virtual boundary may be controlled by the user terminal, or may be autonomously controlled according to a preset speed threshold, which is not limited here.

Whether the autonomous mobile mowing apparatus satisfies the boundary closing condition is ascertained based on the historical traveling path, the current position, the starting point for map construction, and the moving direction included in the operating data.

In an embodiment of the present disclosure, because in the process of constructing the virtual boundary, the autonomous mobile mowing apparatus will incorrectly perform virtual boundary closure when a distance between the current position and an initial position is less than the first threshold and there is an approaching direction, in order to avoid an obstacle, thus forming an incorrect virtual boundary. Therefore, the historical traveling path in the boundary closing condition is ascertained to avoid occurrence of the above phenomenon, thereby improving the accuracy of virtual boundary closure. The user can be prompted through the boundary closure prompt message to confirm to perform boundary closure after receiving the boundary closure confirmation message, so that the user can further control the opportunity for boundary closure, thereby further improving the accuracy of boundary closure.

In a possible implementation, the method for constructing a virtual boundary may further include: receiving state indication information from the autonomous mobile mowing apparatus, where the state indication information is used for indicating that the autonomous mobile mowing apparatus satisfies the boundary closing condition.

In the process of constructing the virtual boundary, the state indication information may be further received from the autonomous mobile mowing apparatus, and after the state indication information is received, it is determined that the autonomous mobile mowing apparatus satisfies the boundary closing condition.

In an embodiment of the present disclosure, the state indication information is received from the autonomous mobile mowing apparatus to determine that the autonomous mobile mowing apparatus satisfies the boundary closing condition, thereby improving the efficiency of boundary closure.

FIG. 2 shows a schematic diagram of an example system adapted for the method for constructing a virtual boundary in an embodiment of the present disclosure. As shown in FIG. 2, the example system 20 may include a user terminal 201 and an autonomous mobile mowing apparatus 202.

The user terminal 201 may be a mobile device, a tablet computer, a laptop computer, a desktop computer, a wearable computer, and/or any other suitable type of user device.

In some embodiments, a communication network 203 may be any suitable combination of one or more wired and/or wireless networks. For example, the communication network 203 may include any one or more of: Internet, intranet, wide area network (WAN), local area network (LAN), wireless network, Bluetooth, digital subscriber line (DSL) network, frame relay network, asynchronous transfer mode (ATM) network, virtual private network (VPN), and/or any other suitable communication network. The autonomous mobile mowing apparatus 202 can be connected to the communication network 203 through one or more communication links (e.g., a communication link 205), and the communication network 203 can be linked to the user terminal 201 via one or more communication links (e.g., a communication link 204). The communication link may be any communication link suitable for transmitting data between the user terminal 201 and the autonomous mobile mowing apparatus 202, such as a network link, a dial-up link, a wireless link, a hard-wired link, any other suitable communication link, or any suitable combination of such links.

The autonomous mobile mowing apparatus 202 may be an automatic mower mainly including a housing, and components such as a driving wheel set, a mowing knife set, a controller, a communication module and a sensor provided on the housing.

Based on the above system, an embodiment of the present disclosure provides a method for constructing a virtual boundary, which will be described below with reference to a plurality of embodiments.

### Embodiment II

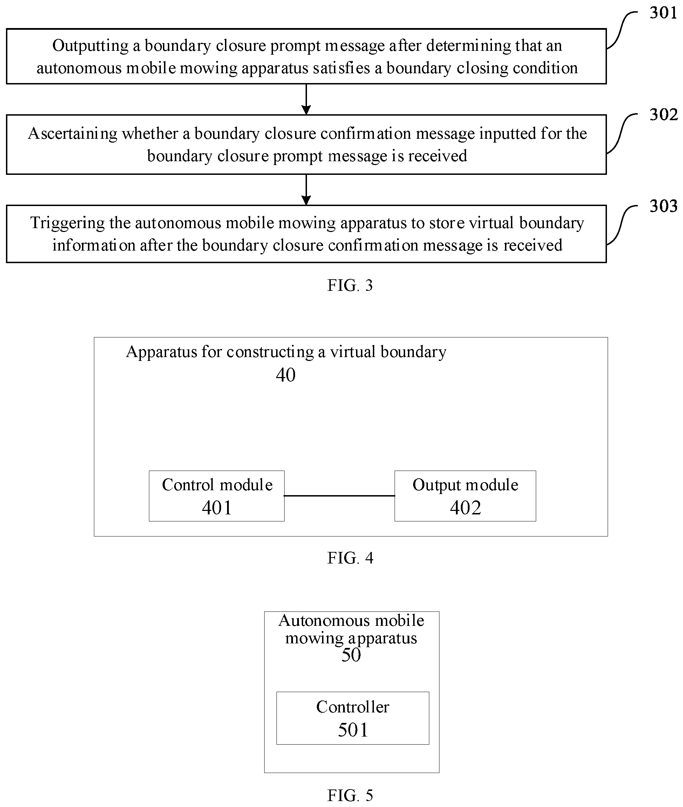

The method is described below. As shown in FIG. 3, a schematic flowchart of steps of the method for constructing a virtual boundary is shown. In the present embodiment, the method includes steps of:
Step 301: outputting a boundary closure prompt message after determining that an autonomous mobile mowing apparatus satisfies a boundary closing condition.

In a process of constructing the virtual boundary, the autonomous mobile mowing apparatus first moves from a starting point for map construction along a boundary line. A user terminal outputs the boundary closure prompt message after determining that the autonomous mobile mowing apparatus satisfies the boundary closing condition.

It should be noted that the movement mode of the autonomous mobile mowing apparatus may be automatic movement, or may be movement remotely controlled by a user through the user terminal, or may be manually dragged movement. The boundary closing condition may be determined based on the historical traveling path of the autonomous mobile mowing apparatus in the process of constructing the virtual boundary, a current position and the starting point for map construction of the autonomous mobile mowing apparatus, and a moving direction of the autonomous mobile mowing apparatus at the current position. The boundary closure prompt message may be a button image for display, or may be a piece of audio for playing.

In addition, the historical traveling path is a traveling path of the autonomous mobile mowing apparatus when traveling from the starting point for map construction to the current position, and the historical traveling path may be a path in any form except for a straight line, such as a polyline path or a curve path. Because a plane where the autonomous mobile mowing apparatus travels is not necessarily a flat plane, the historical traveling path may be a three-dimensional path, and only a projection part of the three-dimensional path on a horizontal plane is computed when the condition is ascertained. The starting point for map construction of the autonomous mobile mowing apparatus is a point from which the autonomous mobile mowing apparatus travels in the process of constructing the virtual boundary. The boundary line may be determined based on at least one image collected by the autonomous mobile mowing apparatus through a carried apparatus such as a camera, or may be determined by a user terminal according to at least one image sent from the autonomous mobile mowing apparatus. A movement speed of the autonomous mobile mowing apparatus in the process of constructing the virtual boundary may be controlled by the user terminal, or may be autonomously controlled according to a preset speed threshold, which is not limited here.

Step 302: ascertaining whether a boundary closure confirmation message inputted for the boundary closure prompt message is received.

After the user terminal outputs the boundary closure prompt message, the user terminal may ascertain whether the boundary closure confirmation message inputted for the boundary closure prompt message is received.

The boundary closure confirmation message may be sent by triggering the user terminal by the user, where the user terminal may be triggered specifically by clicking the button image displayed on the user terminal according to the boundary closure prompt message, or by inputting a specific audio to the user terminal, which is not limited here.

Step 303: triggering the autonomous mobile mowing apparatus to store virtual boundary information after the boundary closure confirmation message is received.

When the user terminal receives the boundary closure confirmation message inputted for the boundary closure prompt message, it means that the user confirms that the virtual boundary of the autonomous mobile mowing apparatus can be generated, and then virtual boundary information for indicating the virtual boundary can be generated by the user terminal or the autonomous mobile mowing apparatus. The virtual boundary is used for defining a boundary line of a moving region of the autonomous mobile mowing device. Then, the autonomous mobile mowing apparatus is triggered to store the virtual boundary information.

In an embodiment of the present disclosure, because in the process of constructing the virtual boundary, the autonomous mobile mowing apparatus will incorrectly perform virtual boundary closure when a distance between the current position and an initial position is less than the first threshold and there is an approaching direction, in order to avoid an obstacle, thus forming an incorrect virtual boundary. Therefore, the historical traveling path in the boundary closing condition is ascertained to avoid occurrence of the above phenomenon, thereby improving the accuracy of virtual boundary closure. The user can be prompted through the boundary closure prompt message to confirm to perform boundary closure after receiving the boundary closure confirmation message, so that the user can further control the opportunity for boundary closure, thereby further improving the accuracy of boundary closure.

In a possible implementation scheme, the boundary closing condition may include three conditions as follows:
(i) determining a closed region surrounded by a connecting line between the current position and the starting point for map construction and the historical traveling path, a length of a minimal bounding rectangle of the closed region being greater than or equal to a second threshold, and a width of the minimal bounding rectangle being greater than or equal to a third threshold.

One of the boundary closing conditions may be ascertaining a size of the region surrounded by the historical traveling path of the autonomous mobile mowing apparatus in the process of constructing the virtual boundary and the connecting line between the current position and the starting point for map construction by first determining the closed region surrounded by the connecting line between the current position and the starting point for map construction and the historical traveling path, and then obtaining the minimal bounding rectangle of the closed region. This condition is satisfied when the length of the minimal bounding rectangle is greater than or equal to the second threshold and the width of the minimal bounding rectangle is greater than or equal to the third threshold.

The current position of the autonomous mobile mowing apparatus may be determined based on coordinates uploaded by the autonomous mobile mowing apparatus. In this case, the connecting line between the current position and the starting point for map construction is determined based on the coordinates uploaded by the autonomous mobile mowing apparatus and the starting point for map construction.

It should be noted that the second threshold and the third threshold may be equal, or may not be equal.

(ii) a distance between the current position and the starting point for map construction being less than or equal to the first threshold.

One of the boundary closing conditions may be ascertaining the distance between the current position of the autonomous mobile mowing apparatus and the starting point for map construction in the process of constructing the virtual boundary. This condition is satisfied when the distance is less than or equal to the first threshold.

(iii) an angle between the moving direction and the connecting line between the current position and the starting point for map construction being less than a fourth threshold.

One of the boundary closing conditions may be ascertaining the moving direction of the autonomous mobile mowing apparatus at the current position, and this condition is satisfied when the angle between the moving direction of the autonomous mobile mowing apparatus and the connecting line between the current position of the autonomous mobile mowing apparatus and the starting point for map construction in the process of constructing the virtual boundary is less than the fourth threshold.

It should be noted that the moving direction of the autonomous mobile mowing apparatus can be reported by the autonomous mobile mowing apparatus, and or may be determined by, e.g., satellite positioning, which is not limited here.

In an embodiment of the present disclosure, the minimal bounding rectangle is established for the closed region to facilitate computing the length and the width of the closed region. The distance between the current position and the starting point for map construction is ascertained to replace manual ascertainment, thereby improving the efficiency and accuracy of boundary closure. The angle between the moving direction of the autonomous mobile mowing apparatus and the connecting line between the current position of the autonomous mobile mowing apparatus and the starting point for map construction in the process of constructing the virtual boundary is computed to determine the moving direction of the autonomous mobile mowing apparatus, thereby preventing the autonomous mobile mowing apparatus from entering a boundary closure state when the moving direction is away from the starting point for map construction, and further improving the efficiency of boundary closure.

In a possible implementation, the second threshold is 0.5 m, the third threshold is 0.5 m, the first threshold is 1 m, and the fourth threshold is 90°.

The boundary closing condition may be: the length of the minimal bounding rectangle of the region surrounded by the historical traveling path of the autonomous mobile mowing apparatus in the process of constructing the virtual boundary being greater than or equal to 0.5 m, the width of the minimal bounding rectangle being greater than or equal to 0.5 m, the distance between the current position of the autonomous mobile mowing apparatus and the starting point for map construction in the process of constructing the virtual boundary being less than or equal to 1 m, and the angle between the moving direction of the autonomous mobile mowing apparatus and the connecting line between the current position of the autonomous mobile mowing apparatus and the starting point for map construction in the process of constructing the virtual boundary being less than 90°.

In an embodiment of the present disclosure, the second threshold and the third threshold are set to be 0.5 m, thereby minimizing the size of the region surrounded by the historical traveling path of the autonomous mobile mowing apparatus in the process of constructing the virtual boundary. The first threshold is set to be 1 m, so that the autonomous mobile mowing apparatus can enter the boundary closure state as early as possible in the case of maximizing a boundary closure accuracy. The fourth threshold is set to be 90°, thereby ensuring that the moving direction of the autonomous mobile mowing apparatus after entering the boundary closure state is approaching the starting point for map construction in the process of constructing the virtual boundary.

In a possible implementation, in the process of constructing the virtual boundary, the user terminal may receive operating data from the autonomous mobile mowing apparatus, and then ascertain whether the autonomous mobile mowing apparatus satisfies the boundary closing condition according to the operating data.

Whether the boundary closing condition is satisfied may be ascertained by the user terminal. After receiving the operating data from the autonomous mobile mowing apparatus, the user terminal ascertains whether the autonomous mobile mowing apparatus satisfies the boundary closing condition according to the operating data.

The operating data includes the historical traveling path of the autonomous mobile mowing apparatus in the process of constructing the virtual boundary, the current position of the autonomous mobile mowing apparatus, the starting point for map construction of the autonomous mobile mowing apparatus in the process of constructing the virtual boundary, and the moving direction of the autonomous mobile mowing apparatus at the current position.

In an embodiment of the present disclosure, the user terminal ascertains the boundary closing condition, thereby providing possibilities for visualization and operability of the ascertainment process, and improving user experience.

In a possible implementation, in the process of constructing the virtual boundary, whether the boundary closing condition is satisfied may be ascertained by the autonomous mobile mowing apparatus. When the boundary closing condition is satisfied, the autonomous mobile mowing apparatus sends state indication information indicating that the boundary closing condition is satisfied to the user terminal, and the user terminal receives the state indication information from the autonomous mobile mowing apparatus to determine that the autonomous mobile mowing apparatus satisfies the boundary closing condition.

In an embodiment of the present disclosure, whether the boundary closing condition is satisfied is ascertained by the autonomous mobile mowing apparatus, and the user terminal only needs to receive the state indication information, thus improving the automation degree in the ascertainment process.

In a possible implementation, in a process of triggering the autonomous mobile mowing apparatus to store the virtual boundary information, the virtual boundary information may be generated according to boundary point information, and then the virtual boundary information may be sent to the autonomous mobile mowing apparatus, so that the autonomous mobile mowing apparatus stores the virtual boundary information.

The process of triggering the autonomous mobile mowing apparatus to store the virtual boundary information may be performed by the user terminal, so that the user terminal generates the virtual boundary information according to the boundary point information, and then sends the virtual boundary information to the autonomous mobile mowing apparatus for storage.

In an embodiment of the present disclosure, the user terminal triggers the autonomous mobile mowing apparatus to store the virtual boundary information, thereby reducing information processing complexity of the autonomous mobile mowing apparatus, reducing requirements for built-in apparatuses of the autonomous mobile mowing apparatus, and reducing production costs of the autonomous mobile mowing apparatus.

In a possible implementation, in the process of triggering the autonomous mobile mowing apparatus to store the virtual boundary information, a boundary generation instruction may be sent to the autonomous mobile mowing apparatus, so that the autonomous mobile mowing apparatus generates the virtual boundary information according to the boundary point information, and stores the virtual boundary information.

The autonomous mobile mowing apparatus can autonomously trigger the process of storing the virtual boundary information. After the autonomous mobile mowing apparatus receives the boundary generation instruction from the user terminal, the autonomous mobile mowing apparatus generates the virtual boundary information according to the boundary point information, and autonomously triggers the storage function to store the virtual boundary information.

In an embodiment of the present disclosure, the autonomous mobile mowing apparatus autonomously triggers the process of storing the virtual boundary information, so that the user terminal only needs to send the boundary generation instruction without other operations, thereby reducing operation complexity of the user, and improving the user experience.

### Embodiment III

Referring to FIG. 4, a structural block diagram of an apparatus 40 for constructing a virtual boundary provided in Embodiment II is shown. As shown in FIG. 4, the apparatus 40 for constructing a virtual boundary includes:
a control module 401 configured to control the autonomous mobile mowing apparatus to travel within a to-be-processed region from a starting point for map construction, and record a position of the autonomous mobile mowing apparatus.

In a process of constructing the virtual boundary of the autonomous mobile mowing apparatus, the autonomous mobile mowing apparatus is first controlled to travel from the starting point for map construction within the to-be-processed region, and record the position of the autonomous mobile mowing apparatus during the travelling.

The position of the autonomous mobile mowing apparatus may be recorded by sending position information through a sensor of the autonomous mobile mowing apparatus and recording the position information, or may be recorded by satellite positioning, which is not limited here.

It should be noted that the movement mode of the autonomous mobile mowing apparatus may be automatic movement, or may be movement remotely controlled by a user through the user terminal, or may be manually dragged movement. The boundary closing condition may be determined based on the historical traveling path of the autonomous mobile mowing apparatus in the process of constructing the virtual boundary, a current position and the starting point for map construction of the autonomous mobile mowing apparatus, and a moving direction of the autonomous mobile mowing apparatus at the current position. The boundary closure prompt message may be a button image for display, or may be a piece of audio for playing.

In addition, the historical traveling path is a traveling path of the autonomous mobile mowing apparatus when traveling from the starting point for map construction to the current position, and the historical traveling path may be a path in any form except for a straight line, such as a polyline path or a curve path. Because a plane where the autonomous mobile mowing apparatus travels is not necessarily a flat plane, the historical traveling path may be a three-dimensional path, and only a projection part of the three-dimensional path on a horizontal plane is computed when the condition is ascertained. The starting point for map construction of the autonomous mobile mowing apparatus is a point from which the autonomous mobile mowing apparatus travels in the process of constructing the virtual boundary. A boundary line may be determined based on at least one image collected by the autonomous mobile mowing apparatus through a carried apparatus such as a camera, or may be determined by a user terminal according to at least one image sent from the autonomous mobile mowing apparatus. A movement speed of the autonomous mobile mowing apparatus in the process of constructing the virtual boundary may be controlled by the user terminal, or may be autonomously controlled according to a preset speed threshold, which is not limited here.
an output module 402 configured to output a virtual boundary map when a boundary closing condition is satisfied, where the boundary closing condition includes a distance between a current position of the autonomous mobile mowing apparatus and a position of the starting point for map construction of the autonomous mobile mowing apparatus being less than or equal to a first threshold, where the first threshold is greater than a positioning accuracy of a sensor in the autonomous mobile mowing apparatus.

The boundary closing condition includes a distance between a current position of the autonomous mobile mowing apparatus and a position of the starting point for map construction being less than or equal to a first threshold, where the first threshold is greater than a positioning accuracy of the sensor in the autonomous mobile mowing apparatus.

The boundary closing condition includes the distance between the current position of the autonomous mobile mowing apparatus and the starting point for map construction of the autonomous mobile mowing apparatus being less than or equal to the first threshold, where the first threshold is greater than the positioning accuracy of the sensor in the autonomous mobile mowing apparatus. The first threshold may be a numerical value, for example, 0.5 m. When the distance between the current position of the autonomous mobile mowing apparatus and the starting point for map construction of the autonomous mobile mowing apparatus is less than or equal to 0.5 m, for example, 0.2 m, a boundary closure prompt message is outputted. At the same time, the first threshold is required to be greater than the positioning accuracy of the sensor in the autonomous mobile mowing apparatus. The positioning accuracy of the sensor is associated with a type of the sensor itself, and the positioning accuracy of different sensors is different. An accuracy of positioning by RTK is generally between 0.02 m and 0.03 m. If the first threshold is set to be less than the positioning accuracy of the sensor, it will cause difficulties for the autonomous mobile mowing apparatus to ascertain whether to perform boundary closure, because the sensor fails to ascertain a distance less than its own accuracy, and then the autonomous mobile mowing apparatus fails to obtain a corresponding numerical value for ascertaining whether the boundary closing condition is satisfied. In this case, the autonomous mobile mowing apparatus may adjust its position many times in order to perform boundary closure, and repeatedly crush a lawn near the autonomous mobile mowing apparatus, thus damaging the lawn to a certain extent. Therefore, the first threshold is required to be set to be greater than the positioning accuracy of the sensor in the autonomous mobile mowing apparatus.

The virtual boundary map indicates a moving boundary of the autonomous mobile mowing apparatus when mowing grass, where the moving boundary corresponds to the virtual boundary.

In an embodiment of the present disclosure, according to the above apparatus 40 for constructing a virtual boundary, a boundary closing condition is set to replace manually guiding the autonomous mobile mowing apparatus to perform boundary closure, and output the virtual boundary map when the boundary closing condition is satisfied, thereby preventing the autonomous mobile mowing apparatus from repeated position adjustment and repeated rolling of the nearby lawn for boundary closure, reducing the damage of the autonomous mobile mowing apparatus to the lawn, and improving the efficiency of virtual boundary closure. The first threshold is set to be greater than the positioning accuracy of the sensor in the autonomous mobile mowing apparatus, thereby avoiding a problem of a low boundary closure efficiency caused by insufficient positioning accuracy in the boundary closure of the autonomous mobile mowing apparatus, and further improving the efficiency of virtual boundary closure.

### Embodiment IV

In the present embodiment, an autonomous mobile mowing apparatus 50 is provided. As shown in FIG. 5, the autonomous mobile mowing apparatus 50 includes a controller 501. The controller 501 is configured to collect boundary point information in a process of constructing a virtual boundary, and then send the boundary point information to a user terminal. After inputting a boundary closure confirmation message for a boundary closure prompt message, the user terminal determines a virtual boundary map based on the boundary point information, and then sends the virtual boundary map to the controller 501. Finally, the controller 501 stores the virtual boundary map.

The boundary closure prompt message is outputted from the user terminal after the autonomous mobile mowing apparatus satisfies a boundary closing condition. The boundary closing condition includes a distance between a current position of the autonomous mobile mowing apparatus and a starting point for map construction of the autonomous mobile mowing apparatus being less than or equal to a first threshold, where the first threshold is greater than a positioning accuracy of a sensor in the autonomous mobile mowing apparatus.

When the autonomous mobile mowing apparatus 50 is in the process of constructing the virtual boundary, a fixed interval may be set, for example, as 0.1 m, and whenever moving 0.1 m, the autonomous mobile mowing apparatus 50 collects information of a boundary point by the controller 501; or fixed time may be set, for example, as every 1 s, and whenever moving for 1 s, the autonomous mobile mowing apparatus 50 collects information of a boundary point by the controller 501. Information of all collected boundary points are integrated into the boundary point information.

In an embodiment of the present disclosure, the autonomous mobile mowing apparatus 50 collects the boundary point information by the controller 501 during travelling, so that the user terminal determines virtual boundary information based on the boundary point information, thereby improving an accuracy of a virtual boundary indicated by the determined virtual boundary information.

### Embodiment V

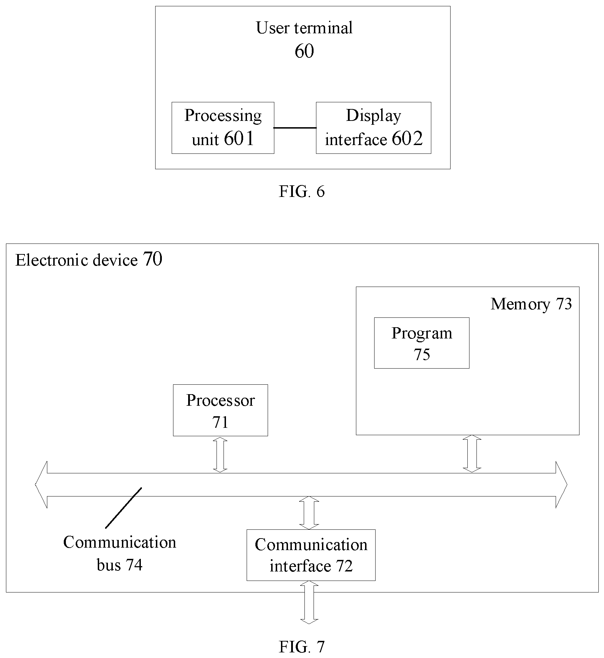

In the present embodiment, a user terminal 60 is provided. As shown in FIG. 6, the user terminal 60 includes: a processing unit 601 and a display interface 602. The processing unit 501 is configured to display a boundary closure prompt message through the display interface 602 after determining that the autonomous mobile mowing apparatus satisfies a boundary closing condition, and output a virtual boundary map after the processing unit 501 receives a boundary closure confirmation message inputted for the boundary closure prompt message.

The boundary closing condition includes the distance between the current position of the autonomous mobile mowing apparatus and the starting point for map construction of the autonomous mobile mowing apparatus being less than or equal to the first threshold, where the first threshold is greater than the positioning accuracy of the sensor in the autonomous mobile mowing apparatus.

The boundary closure prompt message may be a button image, and the display interface 602 may display the button image.

In an embodiment of the present disclosure, the boundary closure prompt message may be displayed through the display interface 602, and can indicate the boundary closure confirmation message inputted by a user, thereby improving user experience.

In a possible implementation, the processing unit 601 may be further configured to hide a virtual button for controlling the autonomous mobile mowing apparatus to travel in the display interface 602 after receiving the boundary closure confirmation message.

The display interface 602 may be provided with the virtual button configured to control the autonomous mobile mowing apparatus to travel, where the virtual button may be a left-turn virtual button, a right-turn virtual button, a forward virtual button, and a backward virtual button, or may be, e.g., a left/right-turn virtual rocker, and a forward/backward virtual rocker.

In an embodiment of the present disclosure, the processing unit 601 hides the virtual button in the display interface 502 after receiving the boundary closure confirmation message, thereby preventing the user from misoperation caused by mistouch when no operation is required, and ensuring an accuracy of virtual boundary construction.

### Embodiment VI

The present embodiment provides an electronic device 70. As shown in FIG. 7, the electronic device 70 may include: a processor 71, a communication interface 72, a memory 73, and a communication bus 74, where:
the processor 71, the communication interface 72, and the memory 73 complete communication with each other through the communication bus 74, and
the communication interface 72 is configured to communicate with other electronic devices or servers.

The processor 71 is configured to perform a program 75, and specifically may perform relevant steps of the method for constructing a virtual boundary in the above embodiments.

Specifically, the program 75 may include a program code. The program code includes computer operation instructions.

The processor 71 may be a CPU, or an Application Specific Integrated Circuit (ASIC), or one or more integrated circuits configured to implement embodiments of the present disclosure. One or more processors included in a smart device may be processors of a same type, e.g., one or more CPUs; or may be processors of different types, e.g., one or more CPUs and one or more ASICs.

The memory 73 is configured to store the program 75. The memory 73 may include a high-speed RAM memory, and may further include a non-volatile memory, e.g., at least one disk memory.

The program 75 may specifically be used for causing the processor 71 to perform the method for constructing a virtual boundary in the above embodiments.

Corresponding description of the corresponding steps and units of the method for constructing a virtual boundary in the above embodiments may be referred to for specific implementations of the steps in the program 75, which will not be repeated here. Those skilled in the art can clearly understand that, for convenience and simplicity of description, the description of corresponding processes in the above method embodiments may be referred to for specific working processes of the above described device and modules, which will not be repeated here.

A boundary closing condition is set for an electronic device in an embodiment of the present disclosure to replace manually guiding the autonomous mobile mowing apparatus to perform boundary closure, and output the virtual boundary map when the boundary closing condition is satisfied, thereby preventing the autonomous mobile mowing apparatus from repeated position adjustment and repeated crushing of a nearby lawn for boundary closure, reducing the damage of the autonomous mobile mowing apparatus to the lawn, and improving the efficiency of virtual boundary closure. A first threshold is set to be greater than a positioning accuracy of a sensor in the autonomous mobile mowing apparatus, thereby avoiding a problem of a low boundary closure efficiency caused by insufficient positioning accuracy in the boundary closure of the autonomous mobile mowing apparatus, and further improving the efficiency of virtual boundary closure.

### Embodiment VII

The present embodiment provides a non-transitory computer-readable storage medium storing computer instructions for causing a machine to perform the method for constructing a virtual boundary as described herein. Specifically, a system or apparatus equipped with a storage medium may be provided, where the storage medium stores a software program code for implementing the functions of any one embodiment among the above embodiments, and makes a computer (or CPU or MPU) of the system or apparatus read and perform the program code stored in the storage medium.

In this case, the program code read from the storage medium itself can implement the functions of any one embodiment among the above embodiments, and thus the program code and the storage medium storing the program code constitute a part of the present disclosure.

Examples of storage mediums for providing the program code include a floppy disk, a hard disk, a magneto-optical disk, an optical disk (e.g., CD-ROM, CD-R, CD-RW, DVD-ROM, DVD-RAM, DVD-RW, or DVD+RW), a magnetic tape, a non-volatile memory card, and a ROM. Alternatively, the program code may be downloaded from a server computer through a communication network.

It should be noted that, depending on the implementation requirements, the components/steps described in the embodiments of the present disclosure may be split into more components/steps, or two or more components/steps or partial operations of the components/steps may be combined into novel components/steps to achieve the goal of the embodiments of the present disclosure.

The above method according to the embodiments of the present disclosure may be implemented in hardware or firmware, or be implemented as software or a computer code storable in a recording medium (such as a CD ROM, a RAM, a floppy disk, a hard disk, or a magneto-optical disk), or be implemented as a computer code that is downloaded from a network, is originally stored in a remote recording medium or a non-transitory machine-readable medium, and will be stored in a local recording medium, such that the method described herein may be processed by such software stored on a recording medium using a general-purpose computer, a special-purpose processor, or programmable or dedicated hardware (such as an ASIC or FPGA). It is understandable that a computer, a processor, a microprocessor controller, or programmable hardware includes a storage component (e.g., a RAM, a ROM, or a flash memory) that can store or receive software or a computer code. The method described herein is implemented when the software or the computer code is accessed and executed by the computer, the processor, or the hardware. Further, when a general-purpose computer accesses the code for implementing the method shown herein, the execution of the code converts the general-purpose computer to a special-purpose computer configured to perform the method shown herein.

It should be noted that, in the description of the present disclosure, the terms "first" and "second" are only used for ease of description of different components or names, and cannot be understood as indicating or implying sequential relationship and relative importance or implicitly indicating the number of indicated technical features. Thus, a feature defined with "first" or "second" may explicitly or implicitly include at least one of the feature.

Unless otherwise defined, all technical terms and scientific terms used herein have the same meaning as commonly understood by those skilled in the technical field of the present disclosure. The terms used herein in the description of the present disclosure are only for the purpose of describing specific embodiments, and are not intended to limit the present disclosure.

It should be noted that, the specific embodiments of the present disclosure are described in detail with reference to the drawings, but should not be understood as imposing any limitation on the scope of protection of the present disclosure. Within the scope described in the claims, various alterations and modifications that can be made by those skilled in the art without making creative work are still encompassed within the scope of protection of the present disclosure.

The examples of the embodiments of the present disclosure are intended to simply illustrate the technical features of the embodiments of the present disclosure, so that those skilled in the art can intuitively understand the technical features of the embodiments of the present disclosure, which are not used to impose any improper limitation on the embodiments of the present disclosure.

Finally, it should be noted that: the above embodiments are merely used to illustrate the technical schemes of the present disclosure, instead of imposing any limitation on the technical schemes. While the present disclosure is described in detail with reference to the above embodiments, those of ordinary skills in the art should understand that: the technical schemes disclosed in the above embodiments may still be modified or a part of the technical features thereof may be replaced equivalently.

## Claims

1. A method for constructing a virtual boundary of a to-be-processed region, comprising:
controlling (101) an autonomous mobile mowing apparatus to travel from a starting point for map construction within the to-be-processed region, and recording a position of the autonomous mobile mowing apparatus; and
outputting (102) a virtual boundary map when a boundary closing condition is satisfied, wherein the boundary closing condition comprises a distance between a current position of the autonomous mobile mowing apparatus and a position of the starting point for map construction being less than or equal to a first threshold, a length of a minimal bounding rectangle of a closed region being greater than or equal to a second threshold, and a width of the minimal bounding rectangle being greater than or equal to a third threshold, wherein the closed region is a region surrounded by a connecting line between the current position and the starting point for map construction and a historical traveling path, and the first threshold is greater than a positioning accuracy of a sensor in the autonomous mobile mowing apparatus.

2. The method according to claim 1, wherein the boundary closing condition further comprises:
a leading edge of the autonomous mobile mowing apparatus facing the starting point for map construction.

3. The method according to claim 2, wherein the leading edge of the autonomous mobile mowing apparatus facing the starting point for map construction in the boundary closing condition comprises: an angle between a moving direction of the autonomous mobile mowing apparatus at the current position and the connecting line between the current position and the starting point for map construction being less than a fourth threshold.

4. The method according to claim 1, wherein the boundary closing condition further comprises:
a distance between a farthest point in the historical traveling path of the autonomous mobile mowing apparatus and the starting point for map construction being greater than a fifth threshold, the fifth threshold being from 0.5 m to 1 m.

5. The method according to claims 1 or 4, wherein the first threshold is greater than or equal to a horizontal length between a center point of the autonomous mobile mowing apparatus and a leading edge of the autonomous mobile mowing apparatus.

6. The method according to claims 2 or 3, wherein the first threshold is greater than or equal to a horizontal length between a center point of the autonomous mobile mowing apparatus and the leading edge of the autonomous mobile mowing apparatus.

7. The method according to any one of claims 1 to 6, wherein the first threshold is from 0.5 m to 1 m, the second threshold is from 0.5 m to 1 m, and the third threshold is from 1 m to 1.5 m.

8. The method according to any one of claims 1 to 7, wherein the method further comprises:
receiving operating data from the autonomous mobile mowing apparatus, wherein the operating data comprises the historical traveling path, the current position, the starting point for map construction, and a moving direction; and
ascertaining whether the autonomous mobile mowing apparatus satisfies the boundary closing condition according to the operating data,
or, the method further comprises:
receiving state indication information from the autonomous mobile mowing apparatus, wherein the state indication information is used for indicating that the autonomous mobile mowing apparatus satisfies the boundary closing condition.

9. The method according to any one of claims 1 to 8, wherein the boundary closing condition is determined based on the historical traveling path of the autonomous mobile mowing apparatus in a process of constructing the virtual boundary, the current position, the starting point for map construction, and a moving direction of the autonomous mobile mowing apparatus at the current position, and the method comprises:
ascertaining whether a boundary closure confirmation message inputted for a boundary closure prompt message is received; and
triggering the autonomous mobile mowing apparatus to store virtual boundary information after the boundary closure confirmation message is received, wherein the virtual boundary information is used for indicating a virtual boundary of the autonomous mobile mowing apparatus, and the virtual boundary information is determined based on boundary point information collected by the autonomous mobile mowing apparatus in the process of constructing the virtual boundary.

10. The method according to claim 3, wherein the fourth threshold is from 91° to 179°.

11. The method according to claim 9, wherein the triggering the autonomous mobile mowing apparatus to store the virtual boundary information comprises:
generating the virtual boundary information according to the boundary point information; and
sending the virtual boundary information to the autonomous mobile mowing apparatus, so that the autonomous mobile mowing apparatus stores the virtual boundary information,
or, the triggering the autonomous mobile mowing apparatus to store the virtual boundary information comprises:
sending a boundary generation instruction to the autonomous mobile mowing apparatus, so that the autonomous mobile mowing apparatus generates the virtual boundary information according to the boundary point information, and stores the virtual boundary information.

12. An autonomous mobile mowing apparatus (50), comprising a controller (501) configured to:
collect boundary point information in a traveling process of constructing a virtual boundary;
send the boundary point information to a user terminal;
receive a virtual boundary map from the user terminal, wherein the virtual boundary map is determined by the user terminal based on the boundary point information after receiving a boundary closure confirmation message inputted for a boundary closure prompt message, the boundary closure prompt message is outputted from the user terminal after the autonomous mobile mowing apparatus satisfies a boundary closing condition, the boundary closing condition comprises a distance between a current position of the autonomous mobile mowing apparatus and a starting point for map construction being less than or equal to a first threshold, a length of a minimal bounding rectangle of a closed region being greater than or equal to a second threshold, and a width of the minimal bounding rectangle being greater than or equal to a third threshold, wherein the closed region is a region surrounded by a connecting line between the current position and the starting point for map construction and a historical traveling path, and the first threshold is greater than a positioning accuracy of a sensor in the autonomous mobile mowing apparatus; and
store the virtual boundary map.

13. A user terminal (60), comprising: a processing unit (601) and a display interface (602), wherein
the processing unit (601) is configured to display a boundary closure prompt message through the display interface (602) after an autonomous mobile mowing apparatus satisfies a boundary closing condition, and output a virtual boundary map after receiving a boundary closure confirmation message inputted for the boundary closure prompt message, wherein the boundary closing condition comprises a distance between a current position of the autonomous mobile mowing apparatus and a starting point for map construction of the autonomous mobile mowing apparatus being less than or equal to a first threshold, a length of a minimal bounding rectangle of a closed region being greater than or equal to a second threshold, and a width of the minimal bounding rectangle being greater than or equal to a third threshold, wherein the closed region is a region surrounded by a connecting line between the current position and the starting point for map construction and a historical traveling path, and the first threshold is greater than a positioning accuracy of a sensor in the autonomous mobile mowing apparatus.

14. The user terminal (60) according to claim 13, wherein the processing unit (601) is configured to hide a virtual button for controlling travel of the autonomous mobile mowing apparatus in the display interface (602) after receiving the boundary closure confirmation message.

15. A non-transitory computer-readable storage medium storing computer instructions, wherein the computer instructions are used for causing a computer to perform the method according to any one of claims 1-11.

## Patentansprüche

1. Verfahren zum Konstruieren einer virtuellen Grenze eines zu bearbeitenden Bereichs, umfassend:
Steuern (101) einer autonomen mobilen Mähvorrichtung, um sich von einem Startpunkt für Kartenkonstruktion innerhalb des zu bearbeitenden Bereichs zu bewegen, und Aufzeichnen einer Position der autonomen mobilen Mähvorrichtung; und
Ausgeben (102) einer virtuellen Grenzkarte, wenn eine Grenzschließungsbedingung erfüllt ist, wobei die Grenzschließungsbedingung einen Abstand zwischen einer aktuellen Position der autonomen mobilen Mähvorrichtung und einer Position des Startpunkts für Kartenkonstruktion, der kleiner oder gleich einem ersten Schwellenwert ist, eine Länge eines minimalen Begrenzungsrechtecks eines geschlossenen Bereichs, die größer oder gleich einem zweiten Schwellenwert ist und eine Breite des minimalen Begrenzungsrechtecks größer oder gleich einem dritten Schwellenwert ist, wobei der geschlossene Bereich ein Bereich ist, der von einer Verbindungslinie zwischen der aktuellen Position und dem Startpunkt für Kartenkonstruktion und einem historischen Fahrweg umgeben ist, und der erste Schwellenwert größer als eine Positionierungsgenauigkeit eines Sensors in der autonomen mobilen Mähvorrichtung ist.

2. Verfahren nach Anspruch 1, wobei die Grenzschließungsbedingung ferner Folgendes umfasst:
eine Vorderkante der autonomen mobilen Mähvorrichtung, die dem Startpunkt für Kartenkonstruktion zugewandt ist.

3. Verfahren nach Anspruch 2, wobei die Vorderkante der autonomen mobilen Mähvorrichtung, die dem Startpunkt für Kartenkonstruktion zugewandt ist, in der Grenzschließungsbedingung umfasst: einen Winkel zwischen einer Bewegungsrichtung der autonomen mobilen Mähvorrichtung an der aktuellen Position und der Verbindungslinie zwischen der aktuellen Position und dem Startpunkt für Kartenkonstruktion, der kleiner ist als ein vierter Schwellenwert.

4. Verfahren nach Anspruch 1, wobei die Grenzschließungsbedingung ferner Folgendes umfasst:
einen Abstand zwischen einem am weitesten entfernten Punkt im historischen Fahrweg der autonomen mobilen Mähvorrichtung und dem Startpunkt für Kartenkonstruktion, der größer als ein fünfter Schwellenwert ist, wobei der fünfte Schwellenwert zwischen 0,5 m und 1 m liegt.

5. Verfahren nach Anspruch 1 oder 4, wobei der erste Schwellenwert größer als oder gleich einer horizontalen Länge zwischen einem Mittelpunkt der autonomen mobilen Mähvorrichtung und einer Vorderkante der autonomen mobilen Mähvorrichtung ist.

6. Verfahren nach Anspruch 2 oder 3, wobei der erste Schwellenwert größer als oder gleich einer horizontalen Länge zwischen einem Mittelpunkt der autonomen mobilen Mähvorrichtung und der Vorderkante der autonomen mobilen Mähvorrichtung ist

7. Verfahren nach einem der Ansprüche 1 bis 6, wobei der erste Schwellenwert zwischen 0,5 m und 1 m liegt, der zweite Schwellenwert zwischen 0,5 m und 1 m liegt und der dritte Schwellenwert zwischen 1 m und 1,5 m liegt.

8. Verfahren nach einem der Ansprüche 1 bis 7, wobei das Verfahren ferner umfasst:
Empfangen von Betriebsdaten von der autonomen mobilen Mähvorrichtung, wobei die Betriebsdaten den historischen Fahrweg, die aktuelle Position, den Startpunkt für Kartenkonstruktion und eine Bewegungsrichtung umfassen; und
Feststellen, ob die autonome mobile Mähvorrichtung die Grenzschließungsbedingung gemäß den Betriebsdaten erfüllt,
oder, das Verfahren umfasst weiterhin:
Empfangen von Zustandsanzeigeinformationen von der autonomen mobilen Mähvorrichtung, wobei die Zustandsanzeigeinformationen verwendet werden, um anzuzeigen, dass die autonome mobile Mähvorrichtung die Grenzschließungsbedingung erfüllt.

9. Verfahren nach einem der Ansprüche 1 bis 8, wobei die Grenzschließungsbedingung basierend auf dem historischen Fahrweg der autonomen mobilen Mähvorrichtung in einem Prozess der Konstruktion der virtuellen Grenze, der aktuellen Position, dem Startpunkt für Kartenkonstruktion und einer Bewegungsrichtung der autonomen mobilen Mähvorrichtung an der aktuellen Position bestimmt wird, und das Verfahren umfasst:
Feststellen, ob eine Grenzschließungsbestätigungsnachricht, die für eine Grenzschließungsaufforderungsnachricht eingegeben wurde, empfangen wird; und
Auslösen der autonomen mobilen Mähvorrichtung, um virtuelle Grenzinformationen zu speichern, nachdem die Grenzschließungsbestätigungsnachricht empfangen wurde, wobei die virtuellen Grenzinformationen verwendet werden, um eine virtuelle Grenze der autonomen mobilen Mähvorrichtung anzuzeigen, und die virtuellen Grenzinformationen basierend auf Grenzpunktinformationen bestimmt werden, die von der autonomen mobilen Mähvorrichtung in dem Prozess der Konstruktion der virtuellen Grenze gesammelt werden.

10. Verfahren nach Anspruch 3, wobei der vierte Schwellenwert zwischen 91° und 179° liegt.

11. Verfahren nach Anspruch 9, wobei das Auslösen der autonomen mobilen Mähvorrichtung, um virtuelle Grenzinformationen zu speichern, Folgendes umfasst:
Erzeugen der virtuellen Grenzinformation entsprechend der Grenzpunktinformation; und
Senden der virtuellen Grenzinformation an die autonome mobile Mähvorrichtung, so dass die autonome mobile Mähvorrichtung die virtuelle Grenzinformation speichert,
oder das Auslösen der autonomen mobilen Mähvorrichtung, um virtuelle Grenzinformationen zu speichern, umfasst:
Senden eines Grenzerzeugungsbefehls an die autonome mobile Mähvorrichtung, so dass die autonome mobile Mähvorrichtung die virtuellen Grenzinformationen gemäß den Grenzpunktinformationen erzeugt und die virtuellen Grenzinformationen speichert.

12. Autonome mobile Mähvorrichtung (50), die eine Steuerung (501) umfasst, die konfiguriert ist, um:
Sammeln von Grenzpunktinformationen in einem Bewegungsprozess der Konstruktion einer virtuellen Grenze;
Senden der Grenzpunktinformationen an ein Benutzerterminal;
Empfangen einer virtuellen Grenzkarte von dem Benutzerterminal, wobei die virtuelle Grenzkarte von dem Benutzerterminal basierend auf den Grenzpunktinformationen bestimmt wird, nachdem eine Grenzschließungsbestätigungsnachricht empfangen wurde, die für eine Grenzschließungsaufforderungsnachricht eingegeben wurde, wobei die Grenzschließungsaufforderungsnachricht von dem Benutzerterminal ausgegeben wird, nachdem die autonome mobile Mähvorrichtung eine Grenzschließungsbedingung erfüllt, wobei die Grenzschließungsbedingung einen Abstand zwischen einer aktuellen Position der autonomen mobilen Mähvorrichtung und einem Startpunkt für Kartenkonstruktion umfasst, der kleiner als oder gleich einem ersten Schwellenwert ist, eine Länge eines minimalen Begrenzungsrechtecks eines geschlossenen Bereichs, die größer oder gleich einem zweiten Schwellenwert ist, und eine Breite des minimalen Begrenzungsrechtecks, die größer oder gleich einem dritten Schwellenwert ist, wobei der geschlossene Bereich ein Bereich ist, der von einer Verbindungslinie zwischen der aktuellen Position und dem Startpunkt für Kartenkonstruktion und einem historischen Fahrweg umgeben ist, und der erste Schwellenwert größer als eine Positionierungsgenauigkeit eines Sensors in der autonomen mobilen Mähvorrichtung ist; und
Speichern der virtuellen Grenzkarte.

13. Benutzerterminal (60), umfassend: eine Verarbeitungseinheit (601) und eine Anzeigeschnittstelle (602), wobei
die Verarbeitungseinheit (601) konfiguriert ist, um nach Erfüllung einer Grenzschließungsbedingung durch eine autonome mobile Mähvorrichtung eine Grenzschließungsaufforderungsnachricht über die Anzeigeschnittstelle (602) anzuzeigen und nach Empfang einer für die Grenzschließungsaufforderungsnachricht eingegebenen Grenzschließungsbestätigungsnachricht eine virtuelle Grenzkarte auszugeben, wobei die Grenzschließungsbedingung einen Abstand zwischen einer aktuellen Position der autonomen mobilen Mähvorrichtung und einem Startpunkt für Kartenkonstruktion der autonomen mobilen Mähvorrichtung umfasst, der kleiner als oder gleich einem ersten Schwellenwert ist, eine Länge eines minimalen Begrenzungsrechtecks eines geschlossenen Bereichs, die größer oder gleich einem zweiten Schwellenwert ist, und eine Breite des minimalen Begrenzungsrechtecks, die größer oder gleich einem dritten Schwellenwert ist, wobei der geschlossene Bereich ein Bereich ist, der von einer Verbindungslinie zwischen der aktuellen Position und dem Startpunkt für Kartenkonstruktion und einem historischen Fahrweg umgeben ist, und der erste Schwellenwert größer als eine Positionierungsgenauigkeit eines Sensors in der autonomen mobilen Mähvorrichtung ist.

14. Benutzerterminal (60) nach Anspruch 13, wobei die Verarbeitungseinheit (601) konfiguriert ist, um nach Empfang der Grenzschließungsbestätigungsnachricht eine virtuelle Schaltfläche zum Steuern von Fahrt der autonomen mobilen Mähvorrichtung in der Anzeigeschnittstelle (602) auszublenden.

15. Nicht-transitorisches, computerlesbares Speichermedium, das Computerbefehle speichert, wobei die Computerbefehle dazu verwendet werden, einen Computer zu veranlassen, das Verfahren nach einem der Ansprüche 1-11 durchzuführen.

## Revendications

1. Procédé de construction d'une limite virtuelle d'une région à traiter, comprenant :
commander (101) un appareil de tondage mobile autonome à se déplacer à partir d'un point de départ pour une construction de carte dans la région à traiter, et enregistrer une position de l'appareil de tondage mobile autonome ; et
fournir (102) une carte de limite virtuelle lorsqu'une condition de fermeture de limite est satisfaite, dans lequel la condition de fermeture de limite comprend une distance entre une position actuelle de l'appareil de tondage mobile autonome et une position du point de départ pour la construction de carte étant inférieure ou égale à un premier seuil, une longueur d'un rectangle de délimitation minimal d'une région fermée étant supérieure ou égale à un deuxième seuil, et une largeur du rectangle de délimitation minimal étant supérieure ou égale à un troisième seuil, dans lequel la région fermée est une région entourée d'une ligne de liaison entre la position actuelle et le point de départ de la construction de carte et d'un chemin de passage historique, et le premier seuil est supérieur à une précision de positionnement d'un capteur dans l'appareil de tondage mobile autonome.

2. Procédé selon la revendication 1, dans lequel la condition de fermeture de limite comprend en outre :
un bord avant de l'appareil de tondage mobile autonome faisant face au point de départ pour la construction de carte.

3. Procédé selon la revendication 2, dans lequel le bord avant de l'appareil de tondage mobile autonome face au point de départ de la construction de carte dans la condition de fermeture de limite comprend : un angle entre une direction de déplacement de l'appareil de tondage mobile autonome à la position actuelle et la ligne de liaison entre la position actuelle et le point de départ de la construction de carte étant inférieur à un quatrième seuil.

4. Procédé selon la revendication 1, dans lequel la condition de fermeture de limite comprend en outre :
une distance entre un point le plus éloigné du chemin de passage historique de l'appareil de tondage mobile autonome et le point de départ de la construction de carte étant supérieure à un cinquième seuil, le cinquième seuil étant compris entre 0,5 m et 1 m.

5. Procédé selon la revendication 1 ou 4, dans lequel le premier seuil est supérieur ou égal à une longueur horizontale entre un point central de l'appareil de tondage mobile autonome et un bord avant de l'appareil de tondage mobile autonome.

6. Procédé selon la revendication 2 ou 3, dans lequel le premier seuil est supérieur ou égal à une longueur horizontale entre un point central de l'appareil de tondage mobile autonome et le bord avant de l'appareil de tondage mobile autonome.

7. Procédé selon l'une quelconque des revendications 1 à 6, dans lequel le premier seuil est de 0,5 m à 1 m, le deuxième seuil est de 0,5 m à 1 m, et le troisième seuil est de 1 m à 1,5 m.

8. Procédé selon l'une quelconque des revendications 1 à 7, comprenant en outre :
recevoir des données de fonctionnement de l'appareil de tondage mobile autonome, les données de fonctionnement comprenant le chemin de passage historique, la position actuelle, le point de départ de la construction de carte et une direction de déplacement ; et
déterminer si l'appareil de tondage mobile autonome satisfait à la condition de fermeture de limite en fonction des données de fonctionnement,
ou, le procédé comprend en outre :
recevoir une information indicatrice d'état de l'appareil de tondage mobile autonome, dans lequel l'information indicatrice d'état sont utilisée pour indiquer que l'appareil de tondage mobile autonome satisfait à la condition de fermeture de limite.

9. Procédé selon l'une quelconque des revendications 1 à 8, dans lequel la condition de fermeture de limite est déterminée sur la base du chemin de passage historique de l'appareil de tondage mobile autonome dans un processus de construction de la limite virtuelle, de la position actuelle, du point de départ de la construction de carte et d'une direction de déplacement de l'appareil de tondage mobile autonome à la position actuelle, et le procédé comprend :
déterminer si un message de confirmation de fermeture de limite entré pour un message d'invite de fermeture de limite est reçu ; et
déclencher l'appareil de tondage mobile autonome à stocker l'information sur limites virtuelles une fois le message de confirmation de fermeture de limite reçu, dans lequel l'information sur limites virtuelles est utilisée pour indiquer une limite virtuelle de l'appareil de tondage mobile autonome, et l'information sur limites virtuelles est déterminée sur la base d'une information sur points de limite collectée par l'appareil de tondage mobile autonome dans le processus de construction de la limite virtuelle.

10. Procédé selon la revendication 3, dans lequel le quatrième seuil est de 91° à 179°.

11. Procédé selon la revendication 9, dans lequel le déclenchement de l'appareil de tondage mobile autonome pour stocker l'information sur limites virtuelles comprend :
générer l'information sur limites virtuelles en fonction de l'information sur points de limite ; et
envoyer l'information sur limites virtuelles à l'appareil de tondage mobile autonome, de sorte que l'appareil de tondage mobile autonome stocke l'information sur limites virtuelles,
ou, le déclenchement de l'appareil de tondage mobile autonome à stocker l'information sur limites virtuelles comprend :
envoyer une instruction de génération de limites à l'appareil de tondage mobile autonome, de sorte que l'appareil de tondage mobile autonome génère l'information sur limites virtuelles en fonction de l'information sur points de limite et stocke l'information sur limites virtuelles.

12. Appareil de tondage mobile autonome (50), comprenant un contrôleur (501) configuré pour collecter une information sur points de limite dans un processus de parcours de construction d'une limite virtuelle ;
envoyer l'information sur points de limite à un terminal utilisateur ;
recevoir une carte de limite virtuelle à partir du terminal utilisateur, dans lequel la carte de limite virtuelle est déterminée par le terminal utilisateur sur la base de l'information sur points de limite une fois que le message de confirmation de fermeture de limite entré pour un message d'invite de fermeture de limite est reçu, le message d'invite de fermeture de limite est fourni par le terminal de l'utilisateur une fois que l'appareil de tondage mobile autonome a satisfait à une condition de fermeture de limite, la condition de fermeture de limite comprend une distance entre une position actuelle de l'appareil de tondage mobile autonome et un point de départ pour la construction de carte étant inférieure ou égale à un premier seuil, une longueur d'un rectangle de délimitation minimal d'une région fermée étant supérieure ou égale à un deuxième seuil, et une largeur du rectangle de délimitation minimal étant supérieure ou égale à un troisième seuil, dans lequel la région fermée est une région entourée d'une ligne de liaison entre la position actuelle et le point de départ de la construction de carte et d'un chemin de passage historique, et le premier seuil est supérieur à une précision de positionnement d'un capteur dans l'appareil de tondage mobile autonome ; et
stocker la carte de limite virtuelle.

13. Terminal d'utilisateur (60), comprenant : une unité de traitement (601) et une interface d'affichage (602), dans lequel
l'unité de traitement (601) est configurée pour afficher un message d'invite de fermeture de limite via l'interface d'affichage (602) une fois que l'appareil de tondage mobile autonome a satisfait à une condition de fermeture de limite, et fournir une carte de limite virtuelle une fois que le message de confirmation de fermeture de limite entré pour le message d'invite de fermeture de limite est reçu, dans lequel la condition de fermeture de limite comprend une distance entre une position actuelle de l'appareil de tondage mobile autonome et un point de départ pour la construction de carte de l'appareil de tondage mobile autonome étant inférieure ou égale à un premier seuil, une longueur d'un rectangle de délimitation minimal d'une région fermée étant supérieure ou égale à un deuxième seuil, et une largeur du rectangle de délimitation minimal étant supérieure ou égale à un troisième seuil, dans lequel la région fermée est une région entourée d'une ligne de liaison entre la position actuelle et le point de départ de la construction de carte et d'un chemin de passage historique, et le premier seuil est supérieur à une précision de positionnement d'un capteur dans l'appareil de tondage mobile autonome.

14. Terminal utilisateur (60) selon la revendication 13, dans lequel l'unité de traitement (601) est configurée pour masquer un bouton virtuel permettant de commander le déplacement de l'appareil de tondage mobile autonome dans l'interface d'affichage (602) une fois le message de confirmation de fermeture de limite reçu.

15. Support de stockage non transitoire lisible par ordinateur stockant des instructions informatiques, dans lequel les instructions informatiques sont utilisées pour mettre en œuvre le procédé selon l'une quelconque des revendications 1 à 11 par un ordinateur.
